# EUROPEAN PATENT APPLICATION

(11) **EP 4 488 447 A1**
(43) Date of publication of application: **08.01.2025**
(21) Application number: 24184800.1
(22) Date of filing: 26.06.2024
(51) Int. Cl.: E01H 1/08, E01H 1/12

(54) **PORTABLE BLOWER, RELATED BLOWING ACCESSORY AND RELATED BLOWING METHOD**

(30) Priority: 07.07.2023 IT 202300014301
(71) Applicant: Stiga S.p.A., 31033 Castelfranco Veneto (TV) (IT)
(72) Inventor: TOLOTTO, Daniele, 31040 Chiarano (TV) (IT); PANDIN, Enrico, 31020 Villorba (TV) (IT)
(74) Representative: PGA S.p.A.

(57) **Abstract**

A portable blower comprises: a hollow structure (2) defining a conduit (3) for the transit of an air flow between a suction zone (4) and a blowing opening (10); a flow generator device operatively arranged inside the structure (2) and/or the conduit (3) which is switchable between a non-operating condition, in which no air flow is generated along the conduit (3) of the structure (2) and an operating condition, in which a main air flow (F1) is generated along the conduit (3) of the structure (2) between the suction zone (4) and the blowing opening (10) to be concentrated centrally with respect to the blowing opening (10); a hollow blowing tool (7), removably engaged to the structure (2) of the portable blower (1) to modify and/or direct the main air flow (F1) in transit inside the conduit (3) of the latter. The blowing tool (7) has: an engagement portion (8) which is removably connected to the structure (2) to give continuity to the latter and to the conduit (3), being in fluid communication with the latter; a blowing portion (9), arranged opposite the engagement portion (8) and in fluid communication with the latter, to flatten the main air flow (F1) outwards according to flow directions transverse to the main flow direction (F1), the blowing opening (10) having an elongated shape and/or a flattened profile to transversely thin and/or longitudinally widen the air flow in output; at least one air intake (6) defined between the engagement portion (8) and the blowing portion (9) to suck, inside the blowing tool (7) and in the operating condition of the flow generator device, a secondary air flow (F2) coming from the outside. The blowing tool (7) is configured to direct the secondary air flow (F2) towards a peripheral zone (10a) of the blowing opening (10).

## Description

### Technical field

The present invention concerns a portable blower of the type usable in outdoor areas, such as for example roads, gardens, parks and the like, for blowing and pushing leaves, small debris, garbage and the like.

The present invention also concerns a blowing tool for a portable blower of the type usable in outdoor areas, such as for example roads, gardens, parks and the like, for blowing and pushing leaves, small debris, garbage and other.

An object of the present invention is also a coupling member configured to allow a removable engagement between a portable blower of the type usable in outdoor areas, such as for example roads, gardens, parks and the like, for blowing and pushing leaves, small debris, garbage and other, and a blowing tool.

An object of the present invention is also a method for blowing air operable by means of a portable blower of the type usable in outdoor areas, such as for example roads, gardens, parks and the like, for blowing and pushing leaves, small debris, garbage and others, which mounts a corresponding blowing tool.

### Prior art

Several portable blowers are known which are usable in outdoor areas, such as for example roads, gardens, parks and/or the like, for blowing and pushing leaves, debris of more or less small size, garbage and others.

Generally, the known portable blowers comprise a casing or a hollow main body inside which there is, at least partially, defined a conduit for the transit of an air flow between a suction zone and a blowing end. The blowing casing may vary in shape and size depending on the model and type of portable blower considered.

Generally, the casing of the portable blowers has a tubular structure that can be made as a single piece or defined by two or more portions appropriately connected to each other. The air transit conduit develops along the tubular structure and ends with a blowing opening that, during use, is held by the user oriented towards the zone of the ground on which it is desired to act by means of blowing.

Inside the casing there is usually housed an air flow generator device that provides one or more air movement impellers and a corresponding motor that rotatably drives said air movement impellers to generate an air flow from a suction zone to the blowing opening.

The tubular structure of the known portable blowers generally has a circular profile whereas the blowing opening through which the air flow generated along the conduit of the blowers is expelled, can have different shapes.

In some cases, the blowing opening has a circular shape or profile, in other cases it has an oval shape or profile, in some other cases it may have a substantially square or rectangular profile with rounded corners or a narrow and thinned profile. Solutions in which the blowing opening keeps the width of the section of the tubular structure of the portable blowers, others in which the blowing opening narrows with respect to the section of the tubular structure and still others in which the blowing opening has a wider shape or profile than the section of the tubular structure defining a countersink are also provided.

Although the known portable blowers allow the production of air flows capable of effectively pushing leaves, debris, broken parts and other, present on the ground or on the roads, the Applicant has found that such blowers are not exempt from some drawbacks and can be improved under several aspects, mainly in relation to the amplitude of the air flow in output from the blowing openings, as well as the range of action of such air flow.

In particular, the Applicant has found that most of the known portable blowers have blowing openings that cause an air flow in output that is concentrated and focused only towards a central zone so that the action of pushing the flow in output is active only in a specific area. This excessive concentration of the air flow in output that is focused on a central area in front of the blowing opening is slightly mitigated by configurations of the blowing opening that are thinner and more oval than the traditional circular profile blowing openings, thus defining slightly wider air flows than those that are concentrated centrally. However, even these types of blowing openings have limits in relation to the amplitude of the air flow in output that are not very effective and efficient outside a central area of action.

### Object of the invention

The main object of the present invention is to solve one or more of the problems encountered in the prior art.

An object of the present invention is to propose a portable blower capable of producing an effective and efficient air flow in output, with a wide range and amplified in terms of the mass of air moved both in the central zone of the flow in output and in the peripheral zones of the latter.

It is also an object of the present invention to propose a blowing tool for portable blowers capable of allowing such blowers to produce an effective and efficient air flow in output, with a wide range and amplified in terms of the mass of air moved both in the central zone of the flow in output and in the peripheral zones of the latter.

Finally, an object of the present invention is to propose an air blowing method operable by means of a portable blower and/or a blowing tool capable of producing an effective and efficient air flow in output, with a wide range and amplified in terms of the mass of air moved both in the central zone of the flow in output and in the peripheral zones of the latter. These objects and others, which will become more apparent from the following description, are substantially achieved by a portable blower, a relative blowing tool, as well as a relative blowing method, in accordance with what is expressed in one or more of the claims and/or the following aspects, taken on their own or in combination with each other.

### Summary of the invention

The aspects of the invention are described herein.

In a 1st independent aspect of the present invention, there is provided a portable blower (1) comprising:
- a structure (2), at least partially hollow, defining at least one conduit (3) for the transit of an air flow between a suction zone (4) and a blowing opening (10);
- a flow generator device operatively arranged inside the structure (2) and/or the conduit (3) which is switchable between a non-operating condition, in which no air flow is generated along the conduit (3) of the structure (2) and an operating condition, in which a main air flow (F1) is generated along the conduit (3) of the structure (2) between the suction zone (4) and the blowing opening (10), optionally the main air flow (F1) being concentrated centrally with respect to the blowing opening (10);

- a blowing tool (7), at least partially hollow, engaged, in particular removably, to the structure (2) to modify and/or direct the main air flow (F1) in transit inside the conduit (3) of the latter, the blowing tool (7) having:
   ∘ an engagement portion (8) connected, in particular removably, to the structure (2) to give continuity to the latter and to the conduit (3), the engagement portion (8) being in fluid communication with the conduit (3) of the structure (2);
   ∘ a blowing portion (9), arranged opposite the engagement portion (8), in fluid communication with the latter to flatten the main air flow (F1) outwards according to flow directions transverse to the main flow direction (F1), the blowing opening (10) having an elongated shape and/or a flattened profile to transversely thin and/or longitudinally widen the air flow in output;
   ∘ at least one air intake (6) defined between the engagement portion (8) and the blowing portion (9) to suck, inside the blowing tool (7) and in the operating condition of the flow generator device, a secondary air flow (F2) from the outside, the blowing tool (7) being configured to direct the secondary air flow (F2) towards the blowing opening (10), optionally towards a peripheral zone (10a) of the blowing opening (10).

In another independent 1st bis aspect of the present invention, a portable blower (1) is provided comprising a structure (2) at least partially hollow, defining at least one conduit (3) for the transit of an air flow between a suction zone (4) and a blowing end (5), the blowing end (5) of the structure (2) ending with a blowing tool (7) in fluid communication with the conduit (3) of the structure (2) to receive from the latter a main flow air (F1) produced by an air generator device operatively housed inside the structure (2), the blowing tool (7) having a blowing portion (9) adapted to direct the main air flow (F1) outwards through a blowing opening (10) that develops on the blowing portion (9) mainly along a direction transverse to the air flow in transit according to an elongated shape and/or a flattened profile to thin, optionally widen and/or direct towards peripheral zones, the air flow in output, the blowing portion (9) having at least one air intake (6) to suck, inside the latter, by means of a suction by the main air flow (F1), a secondary air flow (F2) from the outside, towards the respective blowing opening (10), optionally towards a peripheral zone (10a), of the blowing opening (10). In a further independent 1st ter aspect, combinable with the preceding aspect and with any one of the following aspects, there is provided a blowing tool (7) for a portable blower (1), wherein the blowing tool (7) is at least partially hollow and is configured to removably engage a structure (2) or a blowing end (5) of a structure (2) of the portable blower (1) and modify and/or direct a main air flow (F1) in transit along a conduit (3) defined inside the structure (2), the blowing tool (7) having:
- an engagement portion (8) connectable to a blowing end (5) of the structure (2) configured to give continuity to the blowing end (5) and to the conduit (3) of the structure (2) of the portable blower (1), the engagement portion (8) being in fluid communication with the conduit (3) of the structure (2) when the blowing tool (7) is engaged to the blowing end (5) of the structure (2);
- a blowing portion (9), arranged on the side opposite the engagement portion (8), in fluid communication with the latter to direct the main air flow (F1) outwards mainly along a direction transverse to a direction of the air flow in transit through a blowing opening (10) defined by the blowing portion (9), the blowing opening (10) having an elongated shape and/or a flattened profile to transversely thin and/or to longitudinally widen the air flow in output;
- at least one air intake (6) defined between the engagement portion (8) and the blowing portion (9) to suck inside the blowing tool (7) a secondary air flow (F2) from the outside in an operating condition of the portable blower (1), the blowing tool (7) being configured to direct the secondary air flow (F2) towards the respective blowing opening (10), optionally towards a peripheral zone (10a), of the blowing opening (10).

In a further independent 1st quater aspect, clearly combinable with any aspect relating to the portable blower (1) and/or to the blowing tool (7) for/of the latter, there is provided a coupling member (12) configured to allow a removable engagement between a portable blower (1) and a blowing tool (7), the portable blower (1) comprising:
- a structure (2), at least partially hollow, defining at least one conduit (3) for the transit of an air flow between a suction zone (4) and a blowing end (5) and/or a blowing opening (10);
- a flow generator device operatively arranged inside the structure (2) and which is switchable between a non-operating condition, in which no air flow is generated along the conduit (3) of the structure (2) and an operating condition, in which a main air flow (F1) is generated along the conduit (3), between the suction zone (4) and the blowing opening (10);

the blowing tool (7) being at least partially hollow and removably engageable with the structure (2) or with the blowing end (5) of the structure (2) to modify and/or direct the air flow in transit inside the conduit (3) of the latter, the blowing tool (7) having:
   - an engagement portion (8) removably connectable to the structure (2) or to the blowing end (5) of the structure (2) to give continuity to the latter and to the conduit (3) of the structure (2), the engagement portion (8) being in fluid communication with the conduit (3) when the blowing tool (7) is mounted on the structure (2) of the portable blower (1);
   - a blowing portion (9), arranged opposite the engagement portion (8), in fluid communication with the latter to direct the main air flow (F1) outwards mainly along a direction transverse to the direction of the air flow in transit through a blowing opening (10) defined by the blowing portion (9), the blowing opening (10) having an elongated shape and/or a flattened profile to transversely thin and/or longitudinally widen the air flow in output;
   - at least one air intake (6) defined between the engagement portion (8) and the blowing portion (9) to suck, inside the blowing tool (7) a secondary air flow (F2) from the external environment in the operating condition of the flow generator device, the blowing tool (7) being configured to direct the secondary air flow (F2) towards the blowing opening (10), optionally towards a peripheral zone (10a), of the blowing opening (10),
the coupling member (12) comprising:
   - a first coupling portion (13) arranged on the structure (2) or on the blowing end (5) of the structure (2) of the portable blower (1);
   - a second coupling portion (14) arranged on the engagement portion (8) of the blowing tool (7), the first coupling portion (13) and the second coupling portion (14) being configured to mutually interact between a hooking condition in which the blowing tool (7) is firmly engaged to the structure (2) or to the blowing end (5) of the structure (2) of the portable blower (1) and in fluid communication with the conduit (3) of the structure (2), and a disengagement condition in which they are unhooked from each other, thus being separated.

In a further independent 1st quinquies aspect, there is provided an air blowing method operable by means of a portable blower (1) which comprises:
- a structure (2), at least partially hollow, defining at least one conduit (3) for the transit of a main air flow (F1) between a suction zone (4) and a blowing end (5) and/or a blowing opening (10);
- at least one flow generator device operatively arranged inside the structure (2) and which is switchable between a non-operating condition, in which no air flow is generated along the conduit (3) of the structure (2) and an operating condition, in which an air flow is generated along the conduit (3) between the suction zone (4) and the blowing end (5) and/or the blowing opening (10);
- a blowing tool (7), at least partially hollow, removably engageable to the structure (2) or to the blowing end (5) of the structure (2) to modify and/or direct the flow of air in transit inside the conduit (3) of the latter, the blowing tool (7) having:
   ∘ an engagement portion (8) configured to give continuity to the conduit (3) of the structure (2), the engagement portion (8) being in fluid communication with the conduit (3) of the structure (2) when the blowing tool (7) is engaged to the structure (2) or to the blowing end (5) of the structure (2);
   ∘ a blowing portion (9), arranged opposite the engagement portion (8), in fluid communication with the latter to direct the main air flow (F1) outwards through a blowing opening (10) that develops on the blowing portion (9) mainly along a direction transverse to the air flow in transit, according to a shape and/or a flattened profile, to thin, optionally widen and/or direct the air flow in output,
   ∘ at least one air intake (6) defined between the engagement portion (8) and the blowing portion (9) to suck, inside the latter, by means of the main air flow (F1), a secondary air flow (F2) from the outside towards the respective blowing opening (10), optionally towards a peripheral zone (10a) of the blowing opening (10).
the air blowing method comprising the steps of:
- generating a main air flow (F1) inside the conduit (3) of the structure (2) of the portable blower (1) from the suction zone (4) to the blowing end (5) of the structure (2) and/or to the blowing opening (10);
- conveying the main air flow (F1) generated inside the conduit (3) of the structure (2) of the portable blower (1) inside the engagement portion (8) of the blowing tool (7) towards the blowing portion (9) of the latter,
- sucking, by means of the main air flow (F1) in transit inside the blowing tool (7) and through the at least one air intake (6), at least one secondary air flow (F2) that is added to the main air flow (F1) in transit;
- thinning and/or flattening the main air flow (F1), optionally both the main air flow (F1) and the at least one secondary air flow (F2) sucked through the at least one air intake (6);
- directing the main air flow (F1) and the secondary air flow (F2), thinned and/or flattened, outwards through the blowing opening (10) of the blowing tool (7), in such a way that the air in output advances according to a substantially flattened, optionally widened air flow, in particular diverging in the peripheral zones, even more in particular to assume a substantially fan-shaped development.

In the following aspects, structural and functional technical details regarding the portable blower (1), the blowing tool (7), as well as the coupling member (12) between the latter are added. Every single aspect related to the portable blower (1) is also clearly combinable with any aspect related to the blowing tool (7) and vice versa. Each following aspect related to the portable blower (1) or to the blowing tool (7) can also be considered separately or in combination with each other and/or the other aspects related to the coupling member (12) between the blowing tool (7) and the portable blower (1). Any aspect ascribed to the blowing method can be considered free from, or in combination with the aspects of the portable blower (1) and/or of the blowing tool (7) and/or of the coupling member (12) between the latter and the portable blower (1).

In a 2nd aspect in accordance with any one of the preceding aspects, the engagement portion (8) of the blowing tool (7) has a substantially tubular shape with a profile, in cross-section, substantially circular.

In a 3rd aspect in accordance with any one of the preceding aspects, the engagement portion (8) of the blowing tool (7) has a substantially tubular shape having an inlet section (8a) greater with respect to an outlet section (8b), located downstream of the inlet section (8a), to allow the engagement of the blowing tool (7) outside the structure (2) or at the blowing end (5) of the structure (2) of the portable blower (1).

In the 4th aspect in accordance with the preceding aspect, the engagement portion (8) of the blowing tool (7) has a substantially tubular shape with at least one structural narrowing from the inlet section (8a) to the outlet section (8b) so as to define at least one section reduction for the passage of the air flow towards the blowing portion (9) and/or towards the blowing opening (10).

In a 5th aspect in accordance with any one of the preceding aspects, the blowing portion (9) of the blowing tool (7) has a hollow structure (9a) provided with a first open side (9b) facing the engagement portion (8) of the blowing tool (7) and a second open side (9c) facing away with respect to the engagement portion (8), the hollow structure (9a) of the blowing portion (9) of the blowing tool (7) defining an extended channel (9d) for the transit of an air flow from the first open side (9b) to the second open side (9c), the first open side (9b) of the blowing portion (9) of the blowing tool (7) receiving, optionally at least partially therein, the structure of the engagement portion (8) which is in fluid communication with the extended channel (9d) of the hollow structure (9a) of the blowing portion (9).

In a 6th aspect in accordance with the preceding aspect, the first open side (9b) of the hollow structure (9a) of the blowing portion (9) of the blowing tool (7) has a substantially elliptical shape.

In a 7th aspect in accordance with any one of the two preceding aspects, the first open side (9b) of the hollow structure (9a) of the blowing portion (9) of the blowing tool (7) has a substantially oval shape.

In an 8th aspect in accordance with any one of the three preceding aspects, the first open side (9b) of the hollow structure (9a) of the blowing portion (9) of the blowing tool (7) has a substantially rectangular shape with rounded or circular arc short sides.

In a 9th aspect in accordance with any one of the four preceding aspects, the section of the extended channel (9d) of the hollow structure (9a) of the blowing portion (9) of the blowing tool (7) is variable in shape and/or surface from the first open side (9b) to the second open side (9c).

In a 10th aspect in accordance with the preceding aspect, the air passage surface inside the extended channel (9d) of the hollow structure (9a) of the blowing portion (9) of the blowing tool (7), from the first open side (9b) to the second open side (9c), has at least one surface reduction for the passage of air.

In a 10th bis aspect in accordance with any one of the two preceding aspects, the surface reduction for the passage of air inside the extended channel (9d) of the hollow structure (9a) of the blowing portion (9) of the blowing tool (7), from the first open side (9b) to the second open side (9c), covers at least 20% of the length of the extended channel (9d) measurable from the first open side (9b) to the second open side (9c), in particular at least 30% of the length of the extended channel (9d), even more in particular at least 50% of the length of the extended channel (9d), preferably substantially 100% of the length of the extended channel (9d).

In a 10th ter aspect in accordance with any one of the three preceding aspects, the surface reduction for the passage of air inside the extended channel (9d) of the hollow structure (9a) of the blowing portion (9) of the blowing tool (7) is substantially continuous from the first open side (9b) to the second open side (9c) of the hollow structure (9a) itself.

In a 10th quater aspect in accordance with any one of the four preceding aspects, the extended channel (9d) of the hollow structure (9a) of the blowing portion (9) of the blowing tool (7) has an inlet section (S1) lying on a lying plane adjacent to a lying plane of an outlet section of the engagement portion (8) and having a maximum air passage surface in the extended channel (9d) and/or an outlet section (S3) lying on the same lying plane of the blowing opening (10) and having a minimum air passage surface.

In a 10th quinquies aspect in accordance with any one of the five preceding aspects, the extended channel (9d) of the hollow structure (9a) of the blowing portion (9) of the blowing tool (7) has, in the advancement direction of the air from the first open side (9b) to the second open side (9c), a passage section for the flow, variable in surface, which does not have any surface increase.

In a 10th sexies aspect in accordance with any one of the six preceding aspects, in the advancement direction of the air from the first open side (9b) to the second open side (9c), each passage section or section of the extended channel (9d) of the hollow structure (9a) of the blowing portion (9) of the blowing tool (7) is followed by a passage section or subsequent section having a smaller or equal surface.

In a 10th septies aspect in accordance with any one of the seven preceding aspects, in the advancement direction of the air from the first open side (9b) to the second open side (9c), each passage section or section of the extended channel (9d) of the hollow structure (9a) of the blowing portion (9) of the blowing tool (7) is preceded by a passage section or section having a greater or equal surface.

In a 10th octies aspect in accordance with any one of the eight preceding aspects, the passage section reduction of the extended channel (9d) of the hollow structure (9a) of the blowing portion (9) of the blowing tool (7) in the advancement direction of the air from the first open side (9b) to the second open side (9c), has a surface reduction of the section, comprised between 2000 mm² and 3600 mm², optionally between 2300 mm² and 3300 mm², in particular between 2500 mm² and 3000 mm², even more in particular between 2800 mm² and 2840 mm².

In a 10th novies aspect in accordance with any one of the nine preceding aspects, the passage section reduction of the extended channel (9d) of the hollow structure (9a) of the blowing portion (9) of the blowing tool (7), in the advancement direction of the air from the first open side (9b) to the second open side (9c), has a surface reduction, in percentage value, comprised between 28% and 42% of the maximum passage section, optionally between 32% and 46% of the maximum passage section, in particular between 35% and 42% of the maximum passage section, even more in particular between 39% and 40%.

In an 11th aspect in accordance with any one of the preceding aspects, the extended channel section (9d) of the hollow structure (9a) of the blowing portion (9) of the blowing tool (7) has a shape and which increases in width and decreases in height from the first open side (9b) to the second open side (9c).

In a 12th aspect in accordance with the preceding aspect, the shape of the section of the extended channel (9d) of the hollow structure (9a) of the blowing portion (9) of the blowing tool (7) is reduced in height, from the first open side (9b) to the second open side (9c), in a more accentuated manner in a central zone (9e) of the hollow structure (9a) and less accentuated at opposite sides (9f) thereof.

In a 13th aspect in accordance with any one of the preceding aspects, the air passage section varies in shape and/or in surface from the engagement portion (8) to the blowing portion (9) of the blowing tool (7).

In a 14th aspect in accordance with any one of the preceding aspects, the surface of the air passage section increases at an air transit section between the engagement portion (8) and the portion of blowing portion (9) of the blowing tool (7).

In a 15th aspect in accordance with any one of the preceding aspects, the shape of the air passage section varies from the engagement portion (8) to the blowing portion (9) of the blowing tool (7) from a substantially circular shape to a substantially elliptical or oval or rectangular shape with substantially rounded short sides.

In a 16th aspect in accordance with the 5th aspect or any one of the 6th to 15th aspects when they depend on the 5th aspect, the engagement portion (8) has a tubular shape having an inlet profile and an outlet profile, the first open side (9b) of the hollow structure (9a) of the blowing portion (9) of the blowing tool (7) being substantially tangent, in at least one point, to the outlet profile of the engagement portion (8) of the blowing tool (7), the at least one air intake (6) being defined between the hollow structure (9a) of the blowing tool (7) and the engagement portion (8) of the latter to allow the main air flow (F1) coming from the conduit (3) of the structure (2) of the portable blower (1) and/or from the engagement portion (8) of the blowing tool (7) to suck at least one secondary air flow (F2) from the outside.

In a 17th aspect in accordance with the 5th aspect or any one of the 6th to 16th aspects when they depend on the 5th aspect, the engagement portion (8) has a tubular shape having an inlet profile and an outlet profile, the first open side (9b) of the hollow structure (9a) of the blowing portion (9) of the blowing tool (7) is tangent, at at least two opposite points of the outlet profile of the engagement portion (8) of the blowing tool (7), at least one pair of air intakes (6) being defined on opposite sides of the hollow structure (9a) between the latter and the engagement portion (8) to allow the main air flow in output (F1) coming from the conduit (3) of the structure (2) of the portable blower (1) and/or from the engagement portion (8) of the blowing tool (7) to suck two secondary air flows (F2) from the outside.

In an 18th aspect in accordance with the 5th aspect or any one of the 6th to 17th aspects when they depend on the 5th aspect, the second open side (9c) of the hollow structure (9a) of the blowing portion (9) has a substantially elliptical shape.

In a 19th aspect in accordance with the 5th aspect or any one of the 6th to 18th aspects when they depend on the 5th aspect, the second open side (9c) of the hollow structure (9a) of the blowing portion (9) of the blowing tool (7) has a substantially oval shape.

In a 20th aspect in accordance with the 5th aspect or any one of the 6th to 19th aspects when they depend on the 5th aspect, the second open side (9c) of the hollow structure (9a) of the blowing portion (9) of the blowing tool (7) has a substantially rectangular shape with rounded or circular arc short sides.

In a 21st aspect in accordance with the 5th aspect or any one of the 6th to 20th aspects when they depend on the 5th aspect, the second open side (9c) of the hollow structure (9a) of the blowing portion (9) of the blowing tool (7) has a substantially rectangular shape with the long sides at least partially arcuate having outward concavities and inward convexities, optionally towards the extended channel (9d) of the hollow structure (9a).

In a 22nd aspect in accordance with the 5th aspect or any one of the 6th to 21st aspects when they depend on the 5th aspect, the second open side (9c) of the hollow structure (9a) of the blowing portion (9) of the blowing tool (7) has a shape having an elongated profile in width, optionally pronounced along a transverse direction, in particular substantially perpendicular to the air flow in output from the blowing tool (7).

In a 23rd aspect in accordance with the 5th aspect or any one of the 6th to 22nd aspects when they depend on the 5th aspect, the second open side (9c) of the hollow structure (9a) of the blowing portion (9) of the blowing tool (7) has a flattened shape at least in a central zone, in particular for at least two thirds of the transverse development of the hollow structure (9a) at the blowing opening (10), optionally for at least five sixths of the transverse development of the hollow structure (9a) at the blowing opening (10), even more in particular for at least 80% of the transverse development of the hollow structure (9a) at the blowing opening (10), optionally according to the entire transverse development of the hollow structure (9a) at the blowing opening (10).

In a 24th aspect in accordance with the 5th aspect or any one of the 6th to 23rd aspects when they depend on the 5th aspect, the second open side (9c) of the hollow structure (9a) of the blowing portion (9) of the blowing tool (7) has a shape which narrows at the central zone and widens at the peripheral zones.

In a 25th aspect in accordance with the 5th aspect or any one of the 6th to 24th aspects when they depend on the 5th aspect, the second open side (9c) of the hollow structure (9a) of the blowing portion (9) of the blowing tool (7) has a wider and more flattened shape with respect to the shape of the first open side (9b) of the hollow structure (9a), for which the air flow in output through the second open side (9b) is a flattened and/or accelerated air flow, optionally according to a substantially fan-shaped configuration.

In a 26th aspect in accordance with the 5th aspect or any one of the 6th to 25th aspects when they depend on the 5th aspect, the second open side (9c) of the hollow structure (9a) of the blowing portion (9) of the blowing tool (7) has a shape having a maximum width (L2) greater than a maximum width (L1) of the shape of the first open side (9b) of the hollow structure (9a) and a maximum height (H2) less than a maximum height (H1) of the shape of the open side (9b) of the hollow structure (9a).

In a 27th aspect in accordance with the 5th aspect or any of the 6th to 26th aspects when they depend on the 5th aspect, the second open side (9c) of the hollow structure (9a) of the blowing portion (9) of the blowing tool (7) has a shape having an area smaller than the shape area of the first open side (9b) of the hollow structure (9a).

In a 28th aspect in accordance with the 5th aspect or any one of the 6th to 27th aspects when they depend on the 5th aspect, the hollow structure (9a) of the blowing portion (9) of the blowing tool (7) is configured to direct the main air flow (F1) from the conduit (3) of the structure (2) of the portable blowers (1) and from the engagement portion (8) of the blowing tool (7) at least towards a central zone of the shape of the second open side (9c) of the hollow structure (9a), optionally also towards peripheral zones of the shape of the second open side (9c) of the hollow structure (9a). Using this geometry, the speed of the main air flow in output (F1) can be comprised between 50 and 60 metres per second.

In a 29th aspect in accordance with the 5th aspect or any one of the 6th to 28th aspects when they depend on the 5th aspect, the hollow structure (9a) of the blowing portion (9) and the at least one air intake (6) of the blowing tool (7) are configured to allow the main air flow (F1) coming from the conduit (3) of the structure (2) of the portable blower (1) and from the engagement portion (8) of the blowing tool (7) to suck from the outside and cause inside the hollow structure (9a) a secondary air flow (F2) to direct the latter towards peripheral zones of the shape of the second open side (9c) of the hollow structure (9a). Using this geometry the speed of the secondary air flow (F2) being comprised between 30 and 50 metres per second.

In a 30th aspect in accordance with any one of the preceding aspects, the at least one air intake (6) has an at least partly rounded shape.

In a 31st aspect in accordance with any one of the preceding aspects, the at least one air intake (6) has a shape defined by an arcuate outer edge (6a) with convexity facing outwards and concavity facing the engagement portion (8) of the blowing tool (7) and an arcuate inner edge (6b) with convexity facing the concavity of the outer edge (6a).

In a 32nd aspect in accordance with any one of the preceding aspects, the at least one air intake (6) is substantially shaped like a half-moon or wedge moon.

In a 33rd aspect in accordance with any one of the preceding aspects, the blowing tool (7) is one-piece.

In a 34th aspect in accordance with any one of the 1st to 31st aspects, the blowing tool (7) is made of two distinct parts which can be coupled together, the first part being defined by the engagement portion (8) and the second part being defined by the blowing portion (9).

In a 35th aspect in accordance with the preceding aspect, the blowing tool (7) comprises an engagement member (15) operatively interposed between the engagement portion (8) and the blowing portion (9) to allow the mutual coupling between the latter, as well as separation therebetween.

In a 36th aspect in accordance with the preceding aspect, the engagement member (15) comprises:
- at least one engagement surface relief (15a), optionally two or more engagement surface reliefs (15a),
- at least one engagement seat (15b), optionally two or more engagement grooves (15b), the at least one engagement surface relief (15a) engaging the at least one engagement seat (15b) to ensure the coupling between the engagement portion (8) and the blowing portion (9) of the blowing tool (7).

In a 37th aspect in accordance with the preceding aspect, the at least one engagement surface relief (15a) of the engagement member (15) is made externally, optionally longitudinally, on the engagement portion (8) of the blowing tool (7), whereas the at least one engagement seat (15b) of the engagement member (15) is made internally, optionally longitudinally, in the blowing portion (9) of the blowing tool (7).

In a 38th aspect in accordance with the preceding aspect, the at least one engagement seat (15b) of the engagement member (15) is made on an internal structural thickening (16) of the blowing portion (9) of the blowing tool (7).

In a 39th aspect in accordance with any one of the two preceding aspects, the at least one engagement seat (15b) of the engagement member (15) is made on an engagement shank (17) extending inside the blowing portion (9), optionally according to a circumferential development.

In a 40th aspect in accordance with the preceding aspect when it depend on the 38th aspect, the internal structural thickening (16) of the blowing portion (9) is interposed between the engagement shank (17) and the hollow structure (9a) of the blowing portion (9), at least one engagement seat (15b) of the engagement member (15) being made on an internal surface (17a) of the engagement shank (17) at the internal structural thickening (16).

In a 41 st aspect in accordance with any one of the five preceding aspects, wherein the at least one engagement surface relief (15a) and the at least one engagement seat (15b) of the engagement member (15) are engaged slidingly.

In a 42nd aspect in accordance with any one of the preceding aspects, a coupling member (12) is provided between the blowing tool (7) and the structure (2) of the portable blower (1) to allow the stable mutual engagement of the latter and the separation thereof.

In a 43rd aspect in accordance with the preceding aspect, the coupling member (12) comprises:
- a first coupling portion (13) arranged on the structure (2) or on the blowing end (5) of the structure (2) of the portable blower (1);
- a second coupling portion (14) arranged on the engagement portion (8) of the blowing tool (7), the first coupling portion (13) and the second coupling portion (14) being configured to interact with each other, in a hooking condition, wherein the blowing tool (7) is firmly engaged with the structure (2) or with the blowing end (5) of the structure (2) of the portable blower (1) and is in fluid communication with the conduit (3) of the portable blower (1), and being configured to disengage from each other, in a disengagement condition.

In a 44th aspect in accordance with the preceding aspect, the first coupling portion (13) and the second coupling portion (14) of the coupling member (12) define a bayonet coupling.

In a 45th aspect in accordance with any one of the two preceding aspects, the first coupling portion (13) comprises at least one pair of coupling protuberances (13a) protruding from the structure (2) or from the blowing end (5) of the structure (2) of the portable blower (1) and the second coupling portion (14) comprises at least one pair of coupling seats (14a) obtained inside the engagement portion (8) of the blowing tool (7), the protuberances (13a) of the first coupling portion (13) of the coupling member (12) being engageable in the corresponding coupling seats (14a) of the second coupling portion (14) of the coupling member (12) to ensure the hooking condition and also allow the disengagement condition.

In a 46th aspect in accordance with any one of the three preceding aspects, the first coupling portion (13) comprises three coupling protuberances (13a) protruding transversely from the external surface of the structure (2) or the blowing end (5) of the structure (2) of the portable blower (1), at least two protuberances (13a) being angularly arranged on the external surface of the structure (2) or of the blowing end (5) of the structure (2) of the portable blower (1) at 120° from one another, the second coupling portion (14) of the coupling member (12) comprising three coupling seats (14a) obtained inside the engagement portion (8) of the blowing tool (7), at least two coupling seats (14a) being obtained inside the engagement portion (8) at 120° from one another, the protuberances (13a) of the first coupling portion (13) of the coupling member (12) being engageable in the corresponding coupling seats (14a) of the second coupling portion (14) of the coupling member (12) to ensure the hooking condition and allow the disengagement condition.

In a 47th aspect in accordance with the preceding aspect, at least two protuberances (13a) being angularly arranged on the external surface of the structure (2) or of the blowing end (5) of the structure (2) of the portable blower (1) at about 90° from one another, at least two coupling seats (14a) being obtained inside the engagement portion (8) at about 90° from one another, the protuberances (13a) of the first coupling portion (13) of the coupling member (12) being engageable in the corresponding coupling seats (14a) of the second coupling portion (14) of the coupling member (12) to ensure the hooking condition and allow the disengagement condition.

In a 48th aspect in accordance with any one of two preceding aspects, at least two protuberances (13a) being angularly arranged on the external surface of the structure (2) or of the blowing end (5) of the structure (2) of the portable blower (1) at about 150° from one another, at least two coupling seats (14a) being obtained inside the engagement portion (8) at about 150° from one another, the protuberances (13a) of the first coupling portion (13) of the coupling member (12) being engageable in the corresponding coupling seats (14a) of the second coupling portion (14) of the coupling member (12) to ensure the hooking condition and allow the disengagement condition.

In a 49th aspect in accordance with any one of the four preceding aspects, each coupling protuberance (13a) of the first coupling portion (13) of the coupling member (12) has a substantially cylindrical shape.

In a 50th aspect in accordance with any one of the five preceding aspects, at least one coupling protuberance (13a) of the first coupling portion (13) of the coupling member (12) developing along a substantially orthogonal development axis on the external surface of the structure (2) or of the blowing end (5) of the structure (2) of the portable blower (1). In a 51st aspect in accordance with any one of the six preceding aspects, at least one coupling protuberance (13a) of the first coupling portion (13) of the coupling member (12) developing along an inclined development axis with respect to the external surface of the structure (2) or of the blowing end (5) of the structure (2) of the portable blower (1).

In a 52nd aspect in accordance with any one of the seven preceding aspects, at least one coupling protuberance (13a) of the first coupling portion (13) of the coupling member (12) has, opposite the external surface of the structure (2) or of the blowing end (5) of the structure (2) of the portable blower (1), a substantially flat engagement surface (13b).

In a 53rd aspect in accordance with any one of the seven preceding aspects, at least one coupling protuberance (13a) of the first coupling portion (13) of the coupling member (12) has, opposite the external surface of the structure (2) or of the blowing end (5) of the structure (2) of the portable blower (1), an engagement surface (13b) having at least one convexity (13c), optionally the convexity (13c) being located in a central band of the engagement surface (13b) of the corresponding coupling protuberance (13a).

In a 54th aspect in accordance with any one of the eight preceding aspects, at least one coupling protuberance (13a) of the first coupling portion (13) of the coupling member (12) has, opposite the external surface of the structure (2) or of the blowing end (5) of the structure (2) of the portable blower (1), an engagement surface (13b) having at least one convexity (13c), optionally the convexity (13c) being located in a peripheral band of the engagement surface (13b) of the corresponding coupling protuberance (13a).

In a 55th aspect in accordance with any one of the two preceding aspects, at least one coupling protuberance (13a) of the first coupling portion (13) of the coupling member (12) has, a pair of grooves (13d) obtained superficially on the respective engagement surface (13b), optionally according to an orientation substantially orthogonal to the development direction of the band of the convexity (13c).

In a 56th aspect in accordance with any one of the 47th to 52nd aspects, at least one coupling protuberance (13a) of the first coupling portion (13) of the coupling member (12) has at least one pair of seats (13e) obtained laterally to the coupling protuberance (13a), optionally at or flush with the external surface of the structure (2) or the blowing end (5) of the structure (2) of the portable blower (1).

In a 57th aspect in accordance with any one of the preceding aspects, the portable blower (1) comprises at least one handle portion (2a) arranged on the structure (2) for manual engagement by a user.

In a 58th aspect in accordance with the preceding aspect, the handle portion (2a) is made at or near the suction zone (4).

In a 59th aspect in accordance with any one of the two preceding aspects, the handle portion (2a) is provided with an operating command (2b), optionally a double operating command for starting, safely, the flow generator device by using both hands of the user.

In a 60th aspect in accordance with any one of the three preceding aspects, the handle portion (2a) is provided with a control command (2c) for the intensity of the air flow produced by the air flow generator device (6).

In a 61st aspect in accordance with any one of the preceding aspects, the portable blower (1) has a power supply.

In a 62nd aspect in accordance with the preceding aspect, the flow generator device (6) is electrically powered by means of at least one battery, in particular rechargeable, optionally the at least one battery being housable in a seat (2d) provided with corresponding contacts and/or electrical conductors which is made and/or obtained in a rear appendage (2e) of the structure (2) of the portable blower (1).

Further features and advantages will become more apparent from the detailed description of a preferred, but not exclusive, embodiment of a portable blower, a blowing tool, a coupling member between a blowing tool and a portable blower and a blowing method in accordance with the above-listed aspects, the following claims and the attached figures.

### Brief description of the drawings

The detailed description of one or more preferred embodiments of the invention is now given, by way of non-limiting example, in which:
- figure 1 is a perspective view of a portable blower, in accordance with a first embodiment solution of the present invention;
- figure 2 is a perspective view of a component of the portable blower referred to in figure 1;
- figure 3 is a further perspective view of the component illustrated in figure 2;
- figure 4 is a front elevation view of the component referred to in figures 2 and 3;
- figure 5 is a rear elevation view of the component referred to in figures 2 to 4;
- figure 6 is a section of the component illustrated in figures 2 to 5, carried out along trace VI-VI of figure 3;
- figure 7 is a section of the component illustrated in figures 2 to 6, carried out along trace VII-VII of figure 3 and in which the main and secondary air flows are represented;
- figure 8 is a schematic perspective representation of the section of figure 7 of the component illustrated in figures 2 to 7, in which different sections of the component are shown, schematically by dash-dot lines, in such a way that a reduction in the section close to a respective blowing opening is visually perceived;
- figure 9 is a front elevation view of a further component of the portable blower referred to in figure 1;
- figure 10 is a first side elevation view of the component referred to in figure 9;
- figure 11 is a second side elevation view of the component referred to in figures 9 and 10.

### Detailed description

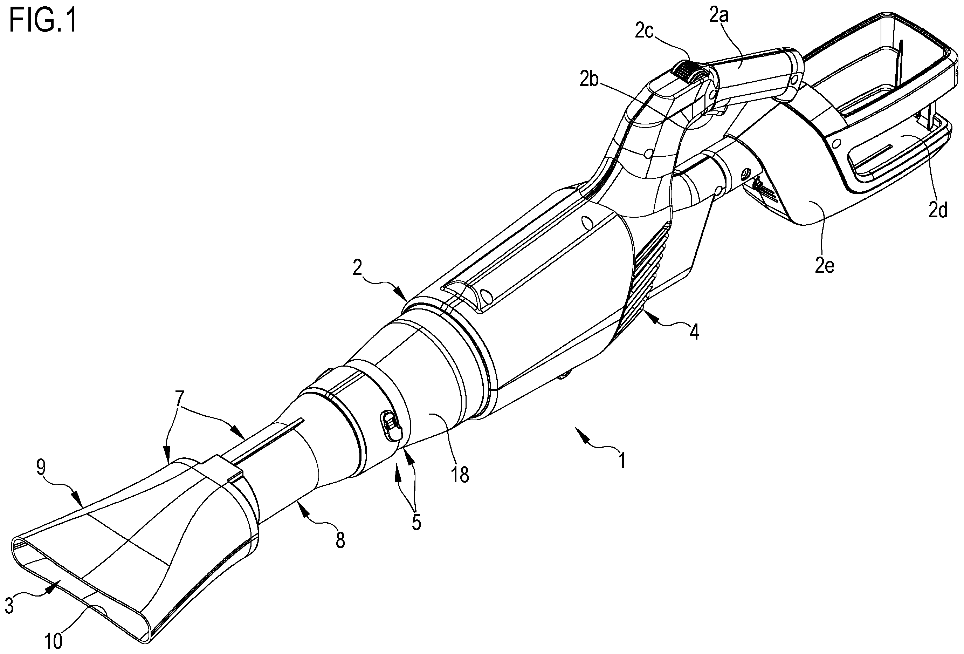

With reference to figure 1, a portable blower 1 is illustrated which is intended for the maintenance, care and/or cleaning of outdoor areas, such as for example roads, gardens, parks and/or the like. In particular, the portable blower 1 is used for the removal, by blowing air, of leaves, small debris, garbage and any other body, object or article of small size, which is present and is a hindrance on the ground or on the road to be cleaned.

In detail, the portable blower 1 comprises a structure 2, at least partially hollow, which defines at least one conduit 3 intended for the transit of an air flow between a suction zone 4 and a blowing opening 10. The portable blower 1 further comprises at least one flow generator device (not visible in the attached figures), such as one or more air movement impellers, which are suitably commanded by at least one corresponding motor, preferably electric. The flow generator device is enclosed in a suitable shell 18 of the structure 2 of the portable blower 1 and is switchable between a non-operating condition, in which no air flow is generated along the conduit 3 of the structure 2, and an operating condition, in which at least an air flow is generated along the conduit 3, between the suction zone 4 and the blowing end 5, in particular between the suction zone 4 and the blowing opening 10.

In the embodiment solution illustrated in figures 1 to 7, the blowing end 5 of the structure 2 of the portable blower 1 is defined by the shell 18 enclosing the flow generator device. However, it should be noted that with the term blowing end 5 of the structure 2, any other structural element or component of the portable blower 1 can be understood which defines the end part of the conduit 3 to which different types of air blowing nozzles can be fitted.

As can be seen in figure 1, the portable blower 1 is provided with at least one handle portion 2a arranged on the structure 2 for manual engagement by a user. The handle portion 2a is made between the suction zone 4 and the blowing end 5, in particular near or at the suction zone 4, in such a way as to facilitate the use of the portable blower 1 also by non-expert users who use the portable blower 1 solely for domestic purposes.

The handle portion 2a is provided with at least one operating command 2b for starting the flow generator device. In order to ensure high levels of safety during use of the portable blower 1, the handle 2a may be provided with a double operating command for starting safely the flow generator by a user who must use both hands to operate the portable blower 1.

In addition, as can be seen in figure 1, the handle 2a can be provided with a power variator or a control device 2c, optionally with a wheel or roller, which allows adjustment of the number of revolutions of the components of the flow generator device 6 and consequently of the intensity or speed of the air flow in output and blowing.

The portable blower 1 also has a power supply, preferably battery-powered, in particular rechargeable. The battery (not illustrated in the attached figures) can be housed in a special seat 2d which is obtained at a rear appendage 2e of the structure 2 of the portable blower 1 and is provided with suitable contacts and electrical conductors.

The portable blower 1 may comprise and fit several blowing tools 7, each at least partially hollow to modify and/or direct the air flow from the conduit 3 of the structure 2 outwards according to a predetermined main air flow in output F1, which exits substantially centrally from the blowing opening 10.

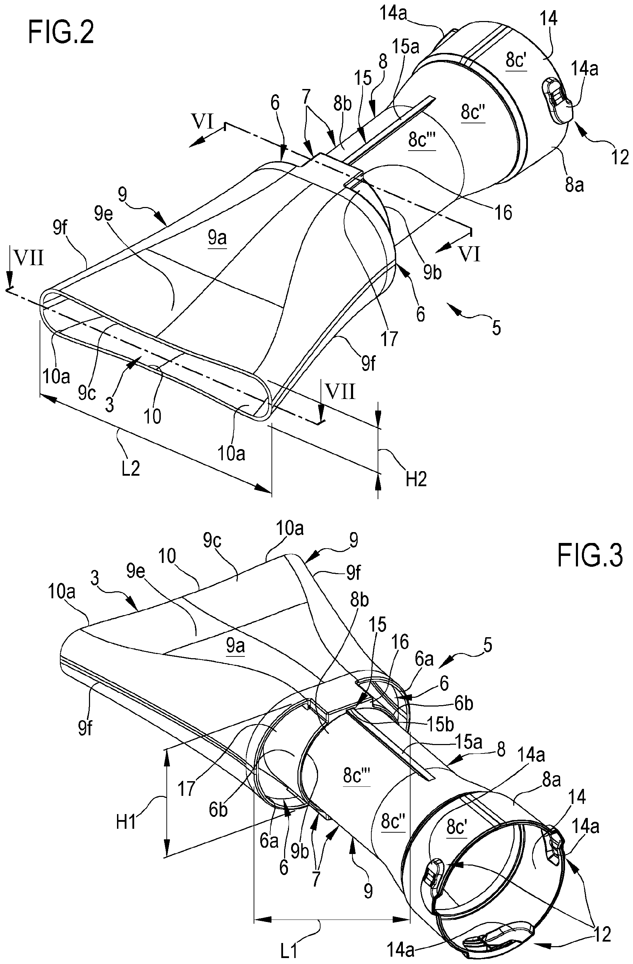

As can be seen in figures 2 to 7, the blowing tool 7 removably engages the structure 2 of the portable blower 1 by means of a suitable engagement portion 8 which gives continuity to the conduit 3 towards the blowing opening 10. In fact, the engagement portion 8 is in fluid communication with the conduit 3 of the structure 2 so that the air advancing along said conduit 3, under the action of the flow generator device, transits from the conduit 3 to the engagement portion 8.

The blowing tool 7 also comprises a blowing portion 9, which is arranged opposite the engagement portion 8. The blowing portion 9 is in fluid communication with the engagement portion 8 and has a shape such as to flatten the main air flow F1 coming from the conduit 3, according to flow directions transverse to the main flow direction F1.

In order to obtain the flattening of the main air flow F1, the blowing opening 10 has an elongated shape and/or a flattened profile to transversely thin and/or longitudinally widen the air flow in output.

Going into the structural detail of the components of the blowing tool 7, the engagement portion 8 has a substantially tubular shape whose profile, in cross-section, is substantially circular. The engagement portion 8 has an inlet section 8a greater with respect to an outlet section 8b, which is located, in the air advancement direction towards the blowing opening 10, downstream of the inlet section 8a. In other words, the engagement portion 8 of the blowing tool 7 has a tubular shape having at least one structural narrowing from the inlet section 8a to the outlet section 8b so as to define at least one section reduction for the passage of the air flow towards the blowing portion 9 and/or towards the blowing opening 10.

In detail, from the inlet section 8a to the outlet section 8b the engagement portion has a first substantially cylindrical stretch 8c' with a substantially constant section, followed by a subsequent substantially truncated conical stretch 8c" with a section reduction away from the first cylindrical stretch 8c', followed in turn by a third substantially cylindrical stretch 8c'" also substantially with a substantially constant section.

The inlet section 8a of the engagement portion 8 is dimensioned such that it can be fitted onto the shell 18 of the structure 2 of the portable blower allowing engagement of the blowing tool 7.

As regards instead the blowing portion 9 of the blowing tool 7, it has a hollow structure 9a provided with a first open side 9b facing the engagement portion 8 and a second open side 9c facing away with respect to the engagement portion 8. The hollow structure 9a defines an extended channel 9d, which can also be seen as an air expulsion chamber, for the transit of the air flow coming from the conduit 3, from the first open side 9b to the second open side 9c.

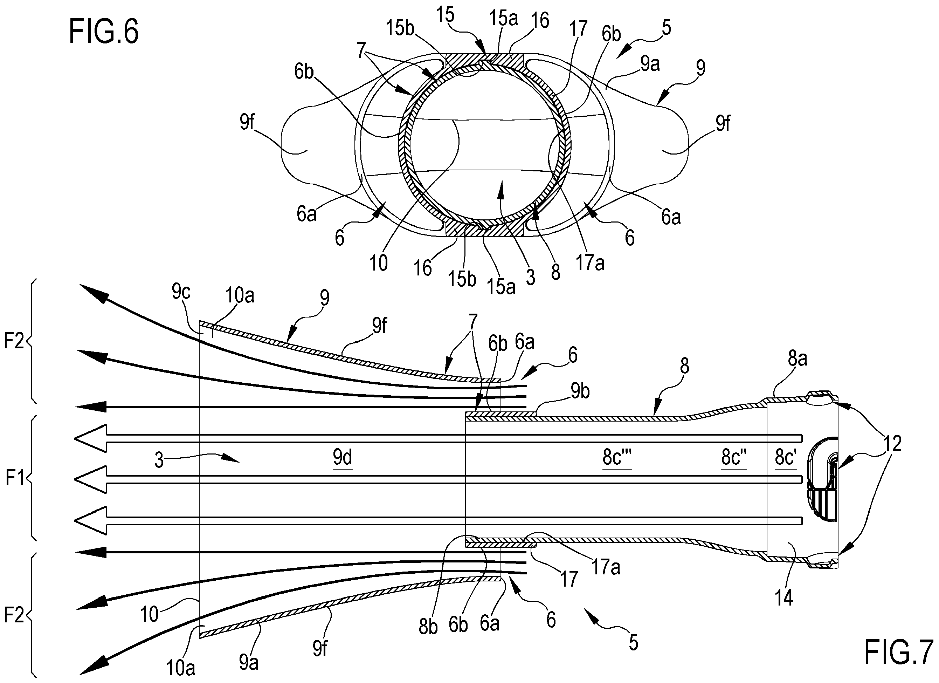

As can be seen in figures 2 to 7 and, in particular, in figure 7, the first open side 9b of the blowing portion 9 receives, at least partially internally, the structure of the engagement portion 8, which is consequently in fluid communication with the extended channel 9d of the hollow structure 9a.

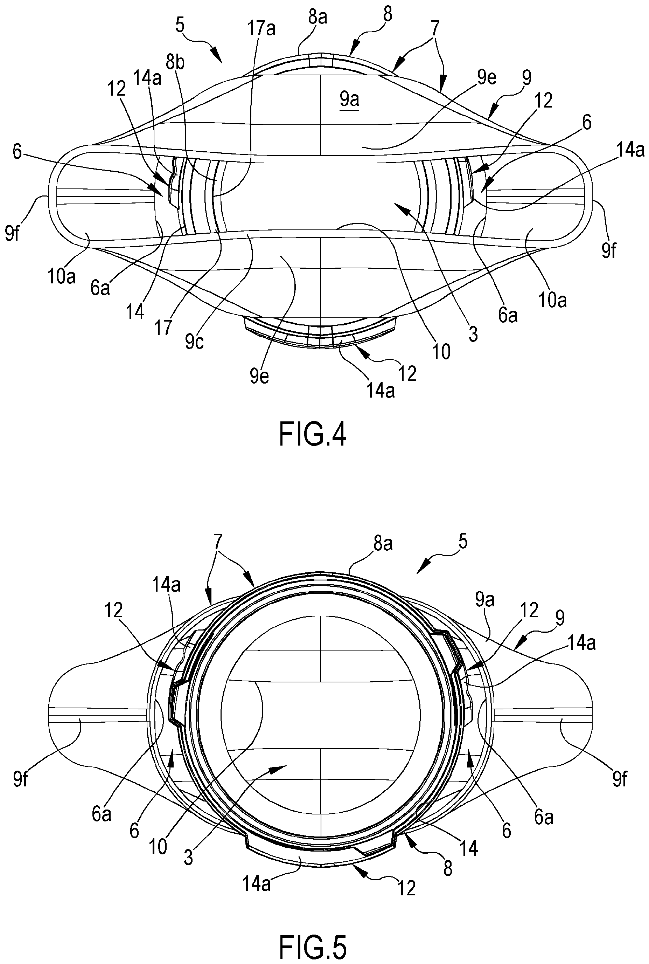

As can be seen in figures 3 and 5, the first open side 9b of the hollow structure 9a of the blowing portion 9 has a substantially elliptical or substantially oval or substantially rectangular shape with rounded or circular arc short sides. With reference instead to figures 2 and 4, the second open side 9c and, consequently, the blowing opening 10, also have a substantially elliptical or substantially oval or substantially rectangular shape with the rounded or circular arc short sides and/or with the long sides at least partially arcuate having outward concavity and inward convexity, i.e. towards the extended channel 9d of the hollow structure 9a.

More and more in detail, the section of the extended channel 9d of the hollow structure 9 of the blowing portion 9 is variable in shape and/or surface from the first open side 9b to the second open side 9c, having at least a surface reduction for the passage of air.

The surface reduction for the passage of air inside the extended channel 9d of the hollow structure 9a, from the first open side 9b to the second open side 9c, covers at least 20% of the length of the extended channel 9d measurable from the first open side 9b to the second open side 9c, in particular at least 30% of the length of the extended channel 9d, even more in particular at least 50% of the length of the extended channel 9d, preferably substantially 100% of the length of the extended channel 9d.

In accordance with the embodiment solution illustrated in figures 1 to 8, the surface reduction for the passage of air inside the extended channel 9d of the hollow structure 9a of the blowing portion 9 of the blowing tool 7 is substantially continuous from the first open side 9b to the second open side 9c of the hollow structure 9a itself, so that the passage section of the air flow, in the advancement direction of the air towards the blowing opening 10, is variable in surface and does not have any surface increase. In other words, each passage section or section of the extended channel 9d of the hollow structure 9a of the blowing portion 9 is followed by a passage section or subsequent section having a smaller or equal surface and/or is preceded by a passage section or section having a greater or equal surface.

The passage section reduction of the extended channel 9d has a surface reduction, in percentage value, comprised between 28% and 42% of the maximum passage section, optionally between 32% and 46% of the maximum passage section, in particular between 35% and 42% of the maximum passage section, even more in particular between 39% and 40%.

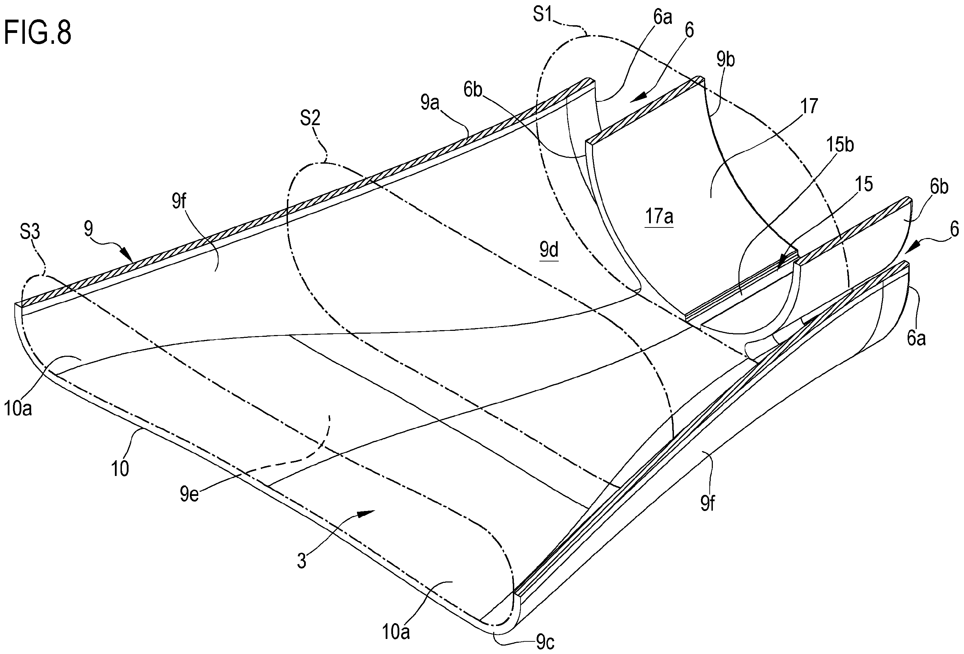

With particular reference to the numerical value of the passage section reduction of the extended channel 9d of the hollow structure 9a, it is noted, from the first open side 9b to the second open side 9c, an overall surface reduction of the passage section, comprised between 2000 mm² and 3600 mm², optionally between 2300 mm² and 3300 mm², in particular between 2500 mm² and 3000 mm², even more in particular between 2800 mm² and 2840 mm². Specifically, as schematically illustrated in the section of figure 8, the extended channel 9d of the hollow structure 9a of the blowing portion 9 has an inlet section S1 lying on a lying plane adjacent to a lying plane of an outlet section of the engagement portion 8 and having a maximum air passage surface in the extended channel 9d and an outlet section S3 lying on the same lying plane of the blowing opening 10 and having a minimum air passage surface. Between the inlet section S1 and the outlet section S3, a series of intermediate sections can be obtained whose surface is gradually reduced away from the inlet section S1 and towards the outlet section S3. By way of example, in figure 7 an intermediate section S2 has been obtained which has a numerical value, in mm², lower than the numerical value of the surface of the inlet section S1 and higher than the numerical value of the surface of the outlet section S3.

In detail, the surface of the extended channel 9d of the hollow structure 9a of the blowing portion 9, at the inlet section S1 is about 7095 mm², at the intermediate section S2 is about 6305 mm², whereas at the outlet section S3 and the blowing opening 10 is about 4278 mm².

Regarding the shape of the hollow structure 9a of the blowing portion 9, the section of the extended channel 9d has a shape which increases in width and decreases in height from the first open side 9b to the second open side 9c, so that the form of the shape of the section varies in the advancement direction of the air towards the blowing opening 10.

The second open side 9c of the hollow structure 9a has a shape having an elongated profile in width, i.e. pronounced along a direction substantially perpendicular to the air flow advancing towards the blowing opening.

The second open side 9c of the hollow structure 9a has a wider and more flattened shape with respect to the shape of the first open side 9b of the hollow structure 9a, for which the air flow in output through the second open side 9b is a flattened and/or accelerated air flow, optionally according to a substantially fan-shaped configuration. In particular, the second open side 9c of the hollow structure 9a has a shape having a maximum width L2 greater than a maximum width L1 of the shape of the first open side 9b of the hollow structure 9a and a maximum height H2 less than a maximum height H1 of the shape of the open side 9b of the hollow structure 9a.

Advantageously, the second open side 9c of the hollow structure 9a has a substantially flattened shape, at least in a central zone of the hollow structure 9a. In other words, the second open side 9c of the hollow structure 9a has a shape which narrows at the central zone and widens at the peripheral zones.

The flattening of the open side 9c of the hollow structure 9a extends for at least two thirds of the transverse development of the hollow structure 9a, being more located at the blowing opening 10, optionally extends for at least five sixths of the transverse development of the hollow structure 9a, even more in particular for at least 80% of the transverse development of the hollow structure 9a. It is also possible to provide that the flattening covers the entire transverse development of the hollow structure 9a at the blowing opening 10.

The shape of the air passage section also varies passing from the engagement portion 8 to the blowing portion 9 of the blowing tool 7. In fact, the shape of the air passage section, at the outlet section 8b of the engagement portion 8, has a substantially circular profile, with a surface value of about 3977 mm². Therefore, the air advancing along the conduit 3 of the structure 2 of the portable blower 2 travels along the engagement portion with a circular section to enter a substantially elliptical or oval or rectangular section with the rounded or arcuate short sides of the extended channel 9d of the hollow structure 9a of the blowing portion 9, whose inlet surface is greater than at least 3118 mm2 with respect to the outlet surface of the engagement portion 8.

As can be seen in figures 1 to 8, at least one pair of air intakes 6 are defined, on opposite sides, between the engagement portion 8 and the blowing portion 9 to suck, inside the blowing tool 7 and, in particular, inside the extended channel 9d of the hollow structure 9a of the blowing portion 9, in the operating condition of the flow generator device, respective secondary air flows F2 (figure 8) coming from the outside and direct said secondary air flows F2 towards corresponding peripheral zones 10a of the blowing opening 10.

As clearly visible in the section of figure 6, the first open side 9b of the hollow structure 9a of the blowing portion 9 of the blowing tool 7 is substantially tangent, at at least two opposite points of the outlet profile of the engagement portion 8, for which the pair of air intakes 6 are defined at opposite sides 9f of the hollow structure 9a of the blowing portion 9, between the latter and the engagement portion 8.

In detail, each air intake 6 has an at least partially rounded shape, which is defined by a respective arcuate outer edge 6a with convexity facing outwards and concavity facing the engagement portion 8 of the blowing tool 7 and a respective arcuate inner edge 6b with convexity facing the concavity of the outer edge 6a.

As can be seen in figures 3 and 5 and, in particular, in the section of figure 6, each air intake 6 is substantially shaped like a half-moon or wedge moon. The air intakes 6 are arranged specularly with respect to a vertical plane of symmetry that divides the blowing tool 7 in half.

Each air intake 6 defines a section having a surface for the passage of the air being sucked from the outside of about 1246 mm².

In accordance with such configuration of the blowing tool 7, the hollow structure 9a of the blowing portion 9 is configured to direct the main air flow F1 from the conduit 3 of the structure 2 of the portable blower 1 and from the engagement portion 8, at least towards a central zone of the shape of the second open side 9c of the hollow structure 9a and of the blowing opening 10, with a slight tendency to involve also a part of the peripheral zones. Using this geometry, the speed of the main air flow in output flow F1 can reach blowing speeds comprised between 50 and 60 metres per second.

The main air flow F1 causes, at each air intake 6, a suction from the outside of corresponding secondary air flows F2 that are directed towards peripheral zones of the second open side 9c of the hollow structure 9a and of the blowing opening 10 to widen the air flow in output as much as possible. The particular geometry of the hollow structure 9a of the blowing portion 9 allows to cause secondary air flows F2 at a speed comprised between 30 and 50 metres per second.

The blowing tool 7 may be made as a single piece so that the engagement portion 8 and the blowing portion are integrally joined to each other.

In the embodiment solution illustrated in figures 1 to 7, the blowing tool 7 is made of two distinct parts (the engagement portion 8 and the blowing portion 9) which can be coupled together by means of at least one engagement member 15 that is interposed operatively. The engagement member 15 allows both the coupling between the engagement portion 8 and the blowing portion 9 and their separation, if necessary, such as for example in case of maintenance, replacement of at least one of the two components or storage under conditions of reduced encumbrances in a special storage space.

As can be seen in figures 2, 3 and 5, the engagement member 15 comprises a pair of engagement surface reliefs 15a and a pair of engagement seat 15b. Each engagement surface relief 15a interacts with a respective engagement seat 15b to ensure the coupling between the engagement portion 8 and the blowing portion 9 of the blowing tool 7. Each engagement surface relief 15a is made externally, according to a longitudinal development, on the engagement portion 8 of the blowing tool 7, whereas each engagement seat 15b is made internally, also according to a longitudinal development, in the blowing portion 9.

It should be noted, however, that for the purposes of the present invention, the arrangement of the engagement reliefs and of the engagement seats may be inventive. In fact, it is possible to provide that the engagement surface reliefs 15a are inside the engagement portion 9, whereas the engagement seats are obtained externally on the engagement portion 8.

Regardless of the configuration adopted for the engagement surface reliefs 15a and the engagement seats 15b, the embodiment solution illustrated in figures 2, 3 and 6 provides that each engagement seat 15b is made on a structural thickening 16 protruding internally from an engagement shank 17 which develops inside the blowing portion 9 according to a circumferential development. In other words, each engagement seat 15b is made on an internal surface 17a of the engagement shank 17 which, in a coupling condition between the engagement portion 8 and the blowing portion 9, is fitted on the outlet section 8b of the engagement portion 8, as shown in figures 1 to 3 and 7, and each internal structural thickening 16 is interposed between the engagement shank 17 and the hollow structure 9a to strengthen the structure of the blowing portion 9 at the engagement member 15.

As can be seen in figures 1 to 3, each engagement surface relief 15a of the engagement member 15 develops longitudinally along the entire longitudinal development of the third stretch 8c‴ of the engagement portion 8, so as to allow relative sliding between the blowing portion 9 and the engagement portion 8 of the blowing tool 7.

A coupling member 12 is also provided which is interposed operatively between the blowing tool 7 and the shell 18 of the structure 2 of the portable blower 1 to allow stable engagement between the latter. The coupling member 12 comprises a first coupling portion 13 arranged on the shell 18 of the structure 2 and a second coupling portion 14 arranged on the engagement portion 8 of the blowing tool 7. The first coupling portion 13 and the second coupling portion 14 are configured to interact with each other. In a hooking condition, the blowing tool 7 is firmly engaged to the shell 18 of the structure 2 of the portable blower 1 and is in fluid communication with the conduit 3. In a disengagement condition, the first and second coupling portion 13, 14 do not interact so that the blowing tool 7 is separated and disjointed from the shell 18 of the structure 2.

In accordance with an embodiment solution of the present invention, the first coupling portion 13 and the second coupling portion 14 of the coupling member 12 define a bayonet coupling, which provides for a relative movement between the blowing tool 7 and the shell 18 of the structure 2 along a substantially longitudinal direction, then a subsequent relative rotation of the same elements about a common longitudinal axis.

Going into detail of the structural configuration of the coupling member 12, the first coupling portion 13 comprises three coupling protuberances 13a which protrude transversely from the external surface of the shell 18 of the structure 2 of the portable blower 1.

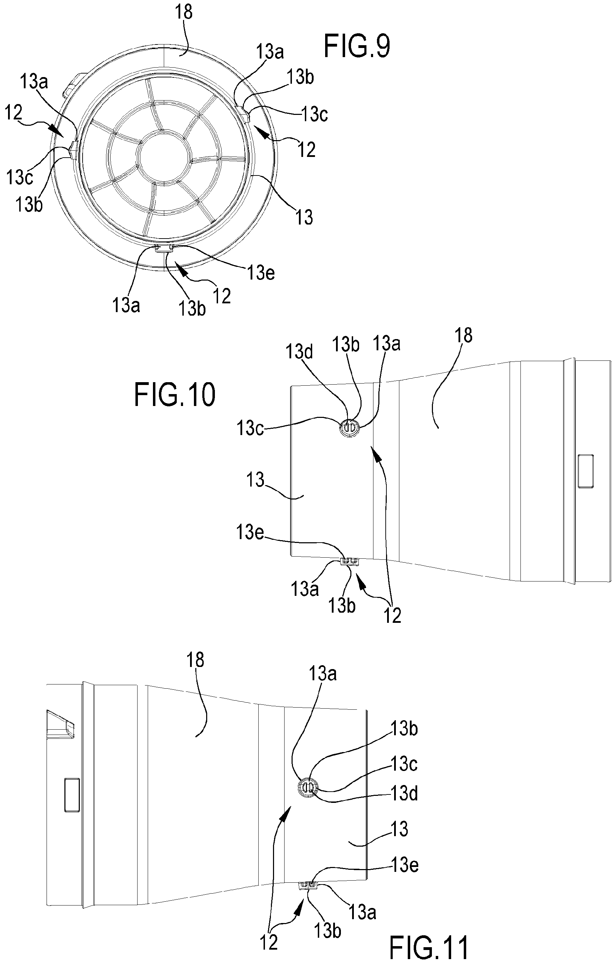

As can be seen in figure 9, two of the protuberances 13a are angularly arranged on the external surface of the shell 18 of the structure 2 of the portable blower 1 at about 120° from one another, two are arranged at about 90° from one another, and two are arranged at about 150° from one another. Similarly, the second coupling portion 14 of the coupling member 12 comprises three coupling seats 14a obtained inside the engagement portion 8 of the blowing tool 7, of which two of the coupling seats 14a are obtained inside the engagement portion 8 at 120° from one another, two are obtained at about 90° from one another and two are obtained at about 150° from one another. The protuberances 13a of the first coupling portion 13 are engageable in the corresponding coupling seats 14a of the second coupling portion 14 to ensure the hooking condition and allow the disengagement condition.

In accordance with the embodiment solution illustrated in figures 9 to 11, each coupling protuberance 13a of the first coupling portion 13 of the coupling member 12 has a substantially cylindrical shape. Two coupling protuberances 13a out of three develop along a substantially orthogonal development axis on the external surface of the shell 18 of the structure 2 of the portable blower 1, whereas the remaining coupling protuberance 13a develops along an inclined development axis with respect to the external surface of the shell 18 of the structure 2 of the portable blower 1. A coupling protuberance 13a has, opposite the external surface of the shell 18 of the structure 2 of the portable blower 1, a substantially flat engagement surface 13b, another one has an engagement surface 13b provided with at least one convexity 13c located mainly in a central band of the respective engagement surface 13b, whereas yet another one has an engagement surface 13b provided with at least one convexity 13c, located in a peripheral band of the respective engagement surface 13b. Two coupling protuberances 13a out of three, each have a pair of grooves 13d obtained superficially on the respective engagement surface 13b, optionally according to an orientation substantially orthogonal to the development direction of the band of the convexity 13c, whereas the remaining coupling protuberance 13a, the one with flat engagement surface 13b, has at least one pair of seats 13e obtained laterally to the coupling protuberance 13a, optionally at or flush with the one on the external surface of the shell 18 of the structure 2 of the portable blower 1.

The coupling seats 14a are shaped in such a way as to interact with the respective coupling protuberances 13a to ensure the stable engagement of the blowing tool 7 to the shell 18 of the structure 2 of the portable blower 1.

### Advantages

The present invention allows to solve the problems encountered in the prior art and to obtain the following advantages. First of all, the blowing tool described above guarantees the expulsion of a flattened and wide-ranging air flow, which is effective and efficient, both at the central zones of the air flow in output and in relation to the peripheral zones thereof. In fact, the presence of air intakes, through which secondary air flows are sucked from the outside to be directed towards peripheral zones of the blowing opening, allows to significantly widen and amplify the layer of air that is produced in output.

According to this configuration, it is possible to produce a homogeneous air mass that exits with considerable speeds also towards the peripheral zones in front of the blowing opening.

## Claims

1. Portable blower (1) comprising:
- a structure (2), at least partially hollow, defining at least one conduit (3) for the transit of an air flow between a suction zone (4) and a blowing opening (10);
- a flow generator device operatively arranged inside the structure (2) and/or the conduit (3) which is switchable between a non-operating condition, in which no air flow is generated along the conduit (3), of the structure (2) and an operating condition, in which a main air flow (F1) is generated along the conduit (3) of the structure (2) between the suction zone (4) and the blowing opening (10), optionally the main airflow (F1) being concentrated centrally with respect to the blowing opening (10);
- a blowing tool (7), at least partially hollow, engaged, in particular removably, to the structure (2) or to a blowing end (5) of the structure (2) to modify and/or direct the main air flow (F1) in transit inside the conduit (3) of the latter, the blowing tool (7) having:
∘ an engagement portion (8) connected, in particular removably, to the structure (2) to give continuity to the latter and to the conduit (3), the engagement portion (8) being in fluid communication with the conduit (3) of the structure (2);
∘ a blowing portion (9), arranged opposite the engagement portion (8), in fluid communication with the latter to flatten the main air flow (F1) outwards according to flow directions transverse to the main flow direction (F1), the blowing opening (10) having an elongated shape and/or a flattened profile to transversely thin and/or longitudinally widen the air flow in output;
∘ at least one air intake (6) defined between the engagement portion (8) and the blowing portion (9) to suck, inside the blowing tool (7) and in the operating condition of the flow generator device, a secondary air flow (F2) from the outside, the blowing tool (7) being configured to direct the secondary air flow (F2) towards the blowing opening (10), optionally towards a peripheral zone (10a) of the blowing opening (10).

2. Portable blower (1) according to the preceding claim, wherein the at least one air intake (6) has an at least partly rounded shape, in particular defined by an arcuate outer edge (6a) with convexity facing outwards and concavity facing the engagement portion (8) of the blowing tool (7) and an arcuate inner edge (6b) with convexity facing the concavity of the outer edge (6a), even more in particular substantially shaped like a half-moon or wedge moon.

3. Portable blower (1) according to any one of the preceding claims, wherein:
- the engagement portion (8) of the blowing tool (7) has a substantially tubular shape with a profile, in cross-section, substantially circular, in particular the engagement portion (8) of the blowing tool (7) having an inlet section (8a) greater with respect to an outlet section (8b), located downstream of the inlet section (8a), in the advancement direction of the main air flow (F1), to allow the engagement of the blowing tool (7) outside the structure (2) or at the blowing end (5) of the structure (2) of the portable blower (1), optionally the engagement portion (8) of the blowing tool (7) having at least a structural narrowing from the inlet section (8a) to the outlet section (8b) so as to define at least one section reduction for the passage of an air flow towards the blowing portion (9) and/or towards the blowing opening (10);
- the blowing portion (9) of the blowing tool (7) has a hollow structure (9a) provided with a first open side (9b) facing the engagement portion (8) of the blowing tool (7) and a second open side (9c) facing away with respect to the engagement portion (8), the hollow structure (9a) of the blowing portion (9) of the blowing tool (7) defining an extended channel (9d) for the transit of an air flow from the first open side (9b) to the second open side (9c), the first open side (9b) of the blowing portion (9) of the blowing tool (7) receiving, optionally at least partially therein, the structure of the engagement portion (8) which is in fluid communication with the extended channel (9d) of the hollow structure (9a) of the blowing portion (9).

4. Portable blower (1) according to the preceding claim, wherein:
- the first open side (9b) of the hollow structure (9a) of the blowing portion (9) of the blowing tool (7) has a substantially elliptical shape, optionally substantially oval, in particular a substantially rectangular shape with rounded or circular arc short sides;
- the second open side (9c) of the hollow structure (9a) of the blowing portion (9) has a substantially elliptical, optionally substantially oval shape, in particular a substantially rectangular shape with rounded or circular arc short sides, even more in particular a substantially rectangular shape with the long sides at least partially arcuate having outward concavities and inward convexities, optionally towards the extended channel (9d) of the hollow structure (9a).

5. Portable blower (1) according to any one of the two preceding claims, wherein the section of the extended channel (9d) of the hollow structure (9a) of the blowing portion (9) of the blowing tool (7) is variable in shape and/or surface from the first open side (9b) to the second open side (9c), in particular the air passage surface inside the extended channel (9d) of the hollow structure (9a) of the blowing portion (9) of the blowing tool (7), from the first open side (9b) to the second open side (9c), having at least one surface reduction for the passage of air, optionally the surface reduction for the passage of air inside the extended channel (9d) of the hollow structure (9a) of the blowing portion (9) of the blowing tool (7) being substantially continuous from the first open side (9b) to the second open side (9c) of the hollow structure (9a) itself.

6. Portable blower (1) according to the preceding claim, wherein the surface reduction for the passage of air inside the extended channel (9d) of the hollow structure (9a) of the blowing portion (9) of the blowing tool (7), from the first open side (9b) to the second open side (9c), covers at least 20% of the length of the extended channel (9d) measurable from the first open side (9b) to the second open side (9c), in particular at least 30% of the length of the extended channel (9d), even more in particular at least 50% of the length of the extended channel (9,), preferably substantially 100% of the length of the extended channel (9d).

7. Portable blower (1) according to any one of the two preceding claims, wherein the passage section reduction of the extended channel (9d) of the hollow structure (9a) of the blowing portion (9) of the blowing tool (7), in the advancement direction of air from the first open side (9b) to the second open side (9c), has a surface reduction, in percentage value, comprised between 28% and 42% of the maximum passage section, optionally between 32% and 46% of the maximum passage section, in particular between 35% and 42% of the maximum passage section, even more in particular between 39% and 40%.

8. Portable blower (1) according to any one of the three preceding claims, wherein the passage section reduction of the extended channel (9d) of the hollow structure (9a) of the blowing portion (9) of the blowing tool (7) in the advancement direction of air from the first open side (9b) to the second open side (9c), has a surface reduction of the section, comprised between 2000 mm² and 3600 mm², optionally between 2300 mm² and 3300 mm², in particular between 2500 mm² and 3000 mm², even more in particular between 2800 mm² and 2840 mm².

9. Portable blower (1) according to any one of the four preceding claims, wherein the section of the extended channel (9d) of the hollow structure (9a) of the blowing portion (9) of the blowing tool (7) has a shape and which increases in width and decreases in heights from the first open side (9b) to the second open side (9c), optionally the shape of the section of the extended channel (9d) of the hollow structure (9a) of the blowing portion (9) of the blowing tool (7) decreases in height, from the first open side (9b) to the second open side (9c), in a more accentuated manner in a central zone (9e) of the hollow structure (9a) and less accentuated at opposite sides (9f) thereof.

10. Portable blower (1) according to any one of the seven preceding claims, wherein the surface of the air passage section increases at an air transit section between the engagement portion (8) and the blowing portion (9) of the blowing tool (7a) optionally the shape of the air passage section changing from the engagement portion (8) to the blowing portion (9) of the blowing tool (7) from a substantially circular shape to a substantially elliptical or oval or rectangular shape with substantially rounded short sides.

11. Portable blower (1) according to any one of the eight preceding claims, wherein the extended channel (9d) of the hollow structure (9a) of the blowing portion (9) of the blowing tool (7) has an inlet section (S1) lying on a lying plane adjacent to a lying plane of an outlet section of the engagement portion (8) and having a maximum air passage surface in the extended channel (9d) and/or an outlet section (S3) lying on the same lying plane of the blowing opening (10) and having a minimum air passage surface, optionally the extended channel (9d) of the hollow structure (9a) of the blowing portion (9) of the blowing tool (7) having, in the advancement direction of air from the first short side (9b) to the second open side (9c), a passage section for the flow which does not have any surface increase, in particular, in the advancement direction of air from the first open side (9b) to the second open side (9c), each passage section or section of the extended channel (9d) of the hollow structure (9a) of the blowing portion (9) of the blowing tool (7) being followed by a passage section or subsequent section having a smaller or equal surface and being preceded by a passage section or section having a greater or equal surface.

12. Portable blower (1) according to any one of the nine preceding claims, the second open side (9c) of the hollow structure (9a) of the blowing portion (9) of the blowing tool (7) has a flattened shape at least in a central zone, in particular for at least two thirds of the transverse development of the hollow structure (9a) at the blowing opening (10), optionally for at least five sixths of the transverse development of the hollow structure (9a) at the blowing opening (10), even more in particular for at least 80% of the transverse development of the hollow structure (9a) at the blowing opening (10), optionally according to the entire transverse development of the hollow structure (9a) at the blowing opening (10).

13. Portable blower (1) according to any one of the ten preceding claims, the second open side (9c) of the hollow structure (9a) of the blowing portion (9) of the blowing tool (7) has a shape which narrows at the central zone and widens at the peripheral zones, optionally the second open side (9c) of the hollow structure (9a) of the blowing portion (9) of the blowing tool (7) having a wider and more flattened shape with respect to the shape of the first open side (9b) of the hollow structure (9a), for which the air flow in output through the second open side (9b) is a flattened and/or accelerated air flow, optionally according to a substantially fan-shaped configuration, in particular the second open side (9c) of the hollow structure (9a) of the blowing portion (9) of the blowing tool (7) having a shape having a maximum width (L2) greater than a maximum width (L1) of the shape of the first open side (9b) of the hollow structure (9a) and a maximum height (H2) less than a maximum height (H1) of the shape of the open side (9b) of the hollow structure (9a).

14. Portable blower (1) according to any one of the preceding claims, wherein the blowing tool (7) is made of two distinct parts which can be coupled together, the first part being defined by the engagement portion (8) and the second part being defined by the blowing portion (9), optionally the blowing tool (7) comprising an engagement member (15) operatively interposed between the engagement portion (8) and the blowing portion (9) to allow the mutual coupling between the latter, as well as separation therebetween, in particular the engagement member (15) comprising:
- at least one engagement surface relief (15a), optionally two or more engagement surface reliefs (15a),
- at least one engagement seat (15), optionally two or more engagement seats (15b), the at least one engagement surface relief (15a) engaging the at least one engagement seat (15b) to ensure the coupling between the engagement portion (8) and the blowing portion (9) of the blowing tool (7),
even more in particular the at least one engagement surface relief (15a) of the engagement member (15) being made externally, optionally longitudinally, on the engagement portion (8) of the blowing tool (7), whereas the at least one engagement seat (15b) of the engagement member (15) is made internally, optionally longitudinally, in the blowing portion (9) of the blowing tool (7), in particular on an internal structural thickening (16) of the blowing portion (9) of the blowing tool (7) and/or on an engagement shank (17) extending inside the blowing portion (9), optionally according to a circumferential development.

15. Blowing tool (7) for portable blowers (1) of the type comprising: a structure (2), at least partially hollow, defining at least one conduit (3) for the transit of an air flow between a suction zone (4) and a blowing opening (10), a flow generator device operatively arranged inside the structure (2) and/or the conduit (3) which is switchable between a non-operating condition, in which no air flow is generated along the conduit (3) of the structure (2) and an operating condition, in which a main air flow (F1) is generated along the conduit (3) of the structure (2) between the suction zone (4) and the blowing opening (10), optionally the main air flow (F1) being concentrated centrally with respect to the blowing opening (10);
said blowing tool (7) comprising:
- an engagement portion (8) connectable to a structure (2) or a blowing end (5) of the structure (2) of a portable blower (1) configured to give continuity to the conduit (3) of the structure (2) of the portable blower (1), the engagement portion (8) being in fluid communication with the conduit (3) of the structure (2) when the blowing tool (7) is engaged to the structure (2) or to the blowing end (5) of the structure (2) of the portable blower (1);
- a blowing portion (9), arranged on the side opposite the engagement portion (8), in fluid communication with the latter to direct the main air flow (F1) outwards mainly along a direction transverse to a direction of the air flow in transit through a blowing opening (10) defined by the blowing portion (9), the blowing opening (10) having an elongated shape and/or a flattened profile to transversely thin and/or to longitudinally widen the air flow in output;
- at least one air intake (6) defined between the engagement portion (8) and the blowing portion (9) for sucking inside the blowing tool (7) a secondary air flow (F2) coming from the outside in an operating condition of the portable blower, the blowing tool (7) being configured to direct the secondary air flow (F2) towards the respective blowing opening (10), optionally towards a peripheral zone (10a) of the blowing opening (10), in particular the at least one air intake (6) having a partly rounded shape, even more in particular defined by an outer arcuate edge (6a) with convexity facing outwards and concavity facing the engagement portion (8) of the blowing tool (7) and an inner arcuate edge (6b) with convexity facing the concavity of the outer edge (6a), optionally shaped like a half-moon or edge moon.
